# EUROPEAN PATENT SPECIFICATION

(11) **EP 2 921 821 B1**
(45) Date of publication and mention of the grant of the patent: **23.08.2017**
(21) Application number: 13855634.5
(22) Date of filing: 25.10.2013
(51) Int. Cl.: G01C 19/72

(54) **FIBRE OPTIC GYROSCOPE**
FASEROPTISCHER KREISEL
GYROSCOPE À FIBRE OPTIQUE

(30) Priority: 13.11.2012 RU 2012147956; 13.11.2012 RU 2012147957
(43) Date of publication of application: 23.09.2015
(73) Proprietor: Logozinski, Valery Nikolaevich, Moscow 109387 (RU)
(72) Inventor: Logozinski, Valery Nikolaevich, Moscow 109387 (RU)
(74) Representative: Diehl & Partner GbR
(86) International application number: PCT/RU2013/000948
(87) International publication number: WO 2014/077735

(56) References cited:
- EP-A1- 2 333 498
- EP-A2- 0 104 942
- WO-A1-93/24807
- WO-A1-95/14907
- RU-C1- 2 139 499
- US-A- 4 881 817
- US-A- 5 999 304
- BURNS W K ET AL: "Fiber-optic gyroscope with polarization-holding fiber", OPTICS LETTERS, OPTICAL SOCIETY OF AMERICA, US, vol. 8, no. 10, 1 October 1983 (1983-10-01), pages 540-542, XP002606381, ISSN: 0146-9592, DOI: 10.1364/OL.8.000540

## Description

### TECHNICAL FIELD

The present invention relates to a development technique of gyroscopes based on Sagnac effect and can be used for manufacturing of fiber optic gyroscopes (FOG).

### PRIOR ART

There is a FOG (see e.g. Optics Letters, Vol.8(10), pp. 540 - 542, 1983, «Fiber-optic gyroscope with polarization-holding fiber»), which comprises sequentially located and connected by optical fiber the following components: an emitting module, a photo-receiving module, a first coupler, a polarizer, a second coupler, a fiber loop and a phase modulator, which is made as a piezoceramic element with an optical fiber segment fixed on the element' surface. All these optical components are produced on a base of a single-mode birefringent optical fiber.

This FOG is characterized by rather small bias and drift of offset signal due to use of a polarization maintaining fiber and of a spatial polarization filtering at input-output of the fiber loop. Additionally, a modulating technique is used in this FOG to decrease significantly an influence of noise on a FOG measurement accuracy. The phase modulation of counter waves, which propagate through fiber loop in opposite directions, is performed by a periodical extension of short segment of the fiber loop wound on a piezoceramic cylinder. A FOG output signal is formed by detection of a signal from the photo-receiving module at the frequency of phase modulation (the first harmonic).

But, when the piezoceramic modulator is excited by a periodical signal the component at the modulation frequency arises at the output of the photo-receiving module. This component is shifted by 90° with respect to the useful signal (rotation signal).

This component (quadrature signal) arises due to a birefringence modulation of the fiber which is wound on the piezoceramic cylinder when the fiber is elongated and also due to a cross coupling between polarization modes which arises at a fiber inhomogeneity. The modulation of the fiber birefringence results in a modulation of a radiation intensity after its passing through the polarizer. A depth of the intensity modulation depends on a polarizer orientation with respect to the fiber birefringence axes. The quadrature signal is not completely suppressed by a lock-in detecting procedure that results in a FOG bias arising.

The nearest analogue (prototype) is a fiber optic gyroscope (see Russian Federation patent serial number 2139499, priority - 05.03.1998, Int.Cl. - G 01C 19/72) which comprises sequentially located and connected by the birefringent optical fiber the following components: the emitting module, the photo-receiving module, the first coupler, the polarizer, the second coupler, the fiber loop and the phase modulator. The phase modulator is made as input/output segments of a free fiber loop which are fixed on the surface of the piezoceramic element. The fixed segments of the fiber loop are parallel and have an equal length. Additionally, this FOG comprises two transformers (converters) of the polarization modes (one to another) which are performed as twisted and fixed tapered fiber sections. One transformer (converter) is located in the fiber loop and another one is located in the free fiber loop of the phase modulator.

This FOG is characterized by smaller values of the bias and the bias drift in comparison with other known FOGs. That is resulted from a design of the modulator based on two fiber segments of equal length which are synchronously elongated due to a bifilar winding on the piezoceramic element. The first converter of the polarization modes (one to another) is placed between the elongated segments. It enables to eliminate the modulation of the birefringence in the modulator that results in a significant reduction of the quadrature signal Q and of the correspondent bias component of FOG. The second converter of the polarization modes is placed in the fiber loop and enables to recover a level of the interferential (useful) signal which is significantly reduced due to operating of the mode converter in the phase modulator.

But, a production yield of such FOGs is decreased due to a technological variation of FOG parameters if special criteria for the bias and for its stability are used.

### DISCLOSURE OF THE INVENTION

The invention "FIBER OPTIC GYROSCOPE" is aimed at a development of a technical solution for making of the fiber optic gyroscope with a repeatable optical configuration which enables to reach the maximal degree of filtering of the useful signal in practical conditions with restricted functioning of some optical components of FOG. That results in increasing of the production yield (according to the criteria for the bias and the bias stability) due to a localization of the main defects and to a choosing of lengths of fiber segments between the optical components (in all-fiber FOG) at which the delays of secondary waves (arising at the fiber defects) exceed a coherence time of a light source. So, an efficiency of interference between the secondary and the primary waves (their mutual coherence) decreases significantly and, hence, the FOG bias caused by the secondary waves decreases too.

The assigned task is achieved by special choosing of the lengths of the fiber segments in the FOG which comprises the multiturn closed loop based on the birefringent single-mode optical fiber (hereinafter - the fiber loop), the emitting module, the photo-receiving module, the two couplers, the polarizer, the phase modulator, a phase detector, an amplifier, a filter and a generator, wherein the optical output of the emitting module is coupled via the first coupler to the first input/output of the polarizer, the second input/output of the polarizer is coupled via the second coupler to the first input/output of the fiber loop which is coupled via the phase modulator and its second input/output to the second coupler, the first coupler is coupled to the optical input of the photo-receiving module, the electrical output of the photo-receiving module is connected to the first input of the phase detector via the amplifier and the filter connected in-series, the output of the phase detector is the FOG output, the second input of the phase detector is connected to the generator output which is also connected to the input of the phase modulator, the emitting and the photo-receiving modules are coupled to the first coupler by the segments of the birefringent single-mode optical fiber and both couplers are coupled to the polarizer by the segments of the same fiber, the fiber loop, the phase modulator, the couplers and the polarizer are produced on the base of one fiber length without splices, the lengths of the fiber segments connecting the polarizer to the couplers differ in three times and the length of the shorter of these segments is greater than the depolarization length of the fiber but nine times less than the length of the fiber segment connecting the emitting module to the first coupler.

The length of the fiber segment between the first couplers and the polarizer can be bigger or smaller than the length of the fiber segment between the second couplers and the polarizer at that.

An limited FOG accuracy is determined by filtering characteristics of main components - the polarizer (an extinction ratio) and the optical fiber (a parameter of preservation of polarization at a specified length). This dependence is resulted from a complex and nonlinear combination of optical parameters of components and join (transfer) places. The not completely filtered (suppressed) secondary waves can interfere with an arbitrary phase that will result in a distortion of interference of the primary (main) waves. Such distortion at detecting is an origin of the FOG bias and the bias drift.

### BRIEF DESCRIPTION OF THE DRAWING

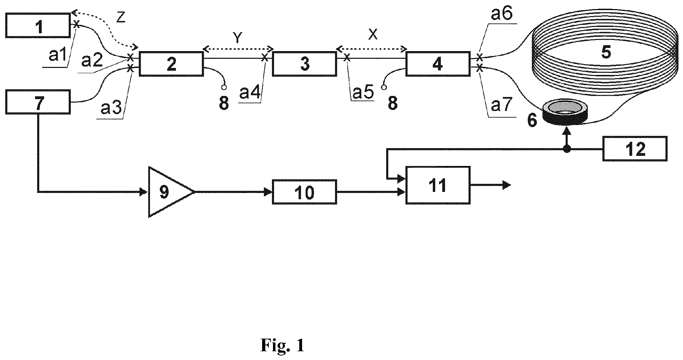

Fig.1 illustrates the architecture of the fiber optic gyroscope.

"Defects" in all-fiber FOG localize at the places of turns of birefringent axes which are designated as a1, ..., a7. The lengths of the fiber segments between the FOG components (between the fiber "defects") are designated as X, Y, Z.

### DETAILED DESCRIPTION OF THE INVENTION

The fiber optic gyroscope (FOG) comprises (see Fig.1) the emitting module 1, the first coupler 2, the polarizer 3, the second coupler 4, the fiber loop 5, the phase modulator 6, the photo-receiving module 7, "dead ends" (fiber ends with a low back reflection) 8, the amplifier 9, the filter 10, the phase detector 11 and the generator 12.

The emitting module 1 is based on the semiconductor superluminescent diode SLD-830.

The FOG is implemented as an all-fiber device with the following components: the couplers 2,4, the polarizer 3, the fiber loop 5 and the phase modulator 6 which are made along one length of birefringent fiber (not numbered in Fig.1). The single mode birefringent fiber with the polarizing beat length of 3 mm is used for manufacturing of the FOG optical components (2 - 5). The couplers (2, 4) were produced by an elongation of two touching fibers at their softening by a local heating in a longitudinal arc discharge. The polarizer 3 is produced by a growing of a birefringent monocrystal around a thinned (tapered) segment of fiber. A length of FOG fiber loop 5 is 100 m and a coil diameter of this fiber loop is 70 mm.

The phase modulator 6 is made similarly to the modulator in FOG prototype (see the Russian Federation patent serial number 2139499, Int.Cl. - G 01C 19/72) on the base of the piezoceramic cylinder (not numbered in Fig.1) from PZT-19 material and 15 mm in diameter. The photo-receiving module 7 is based on the silicon photodiode SSO-PDQ-0.25-5SMD.

The amplifier 9 is made as a broadband amplifier and is assembled according to the standard diagram (see B. 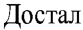 , 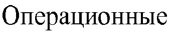 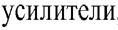 , 1985; i.e. V. Dostal, Operational amplifiers, 1985) with the microcircuit 544 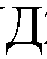 2.

The filter 10 is made as a standard narrow-band filter (see the Russian Federation patent serial number 2444001, Int.Cl. - G 01N 21/63).

The phase detector 11 is made as the phase-lock detector Stanford Research SR 830 and the generator 12 is made as the audio-frequency generator Γ3-118 (see http://www.astena.ru/g3-118.html).

The fiber optic gyroscope operates as follows:
The FOG output signal is proportional to a rotation rate of the fiber loop 5. It is formed by detecting of the first harmonic of modulation frequency by using the broadband amplifier 9, the narrow-band filter 10, the phase detector 11 and the generator 12.

The generator 12 produces a sinusoidal voltage which is used for an excitation of the phase modulator and as a reference signal of the phase detector 11 for amplitude detecting of the first harmonic of modulation frequency in the output signal of the photo-receiving module 7.

In the output signal of the photo-receiving module 7 there is a component at the second harmonic of modulation frequency. This component complicates significantly detecting of the rotation signal and the narrow-band filter 10 is used for its suppression.

Let's consider the all-fiber FOG and introduce the following definitions:
- a working (main) polarization - a line polarization of a wave which passes the polarizer 3 without attenuation;
- an unworking polarization - an orthogonal to the main polarization of wave which is significantly suppressed by the polarizer 3;
- eigen polarizations of the birefringent fiber - orthogonal (each other) line polarizations of the waves which propagate in the fiber with keeping of a line state; the velocity difference (c/n1 - c/n2) is determined by the birefringence value (n1-n2), where n1,n2 - the refractive indexes of the fiber for the waves with the eigen polarizations;
- main waves - counter propagating waves which enter into the fiber loop 5 in the working polarization and go out after passing the fiber loop in the unworking polarization, and also the waves which enter into the fiber loop 5 in the unworking polarization and go out after passing the fiber loop in the working polarization.

In each cross-section of the fiber the oncoming waves propagate in the both eigen polarizations and they are a superposition of the main and secondary waves.

The FOG bias arises when the main and secondary waves interfere but the rotation signal is formed as a result of an interference of the main waves. For analysis of the main and secondary waves interference it is necessary to take into account all combinations of optical paths for the main and secondary waves (each segment of the birenfringent fiber of a length L comprises the two optical paths L*n1 and L*n2 which are different for the waves with the eigen polarizations). A wave can change an optical path at a fiber defect or at any component which couples the eigen polarizations of the fiber. In the all fiber FOG there are no welded joins between the FOG components and the fiber that results in an absence of large defects along a fiber length in the fiber loop and between components. Therefor the coupling places are located in the components where the turns of the fiber birefringent axes exist.

For considered FOG architecture (see Fig. 1) the coupling places are:
- the emitting module 1 (the main polarization of the superluminescent diode (SLD) is not coincides with a the birefringent axis of the fiber);
- the couplers (2 and 4 correspondingly) (a turn of the fibers and a disalignment of the fiber birefrinent axes, an anisotropy of a coupling ratio);
- the polarizer 3 (a disalignment of the working (main) polarization and the eigen polarizations of the birefringent fiber);
- the places (a1, ..., a7) of turns of the fiber birefringent axes.

So-called "depolarization length" is a parameter (inter alia) of a coherent radiation which propagates in the birefringent fiber. It can be defined as a length at which a time delay between the waves with the eigen polarization is greater than a coherence time of a radiation source. Initially the coherent waves with the orthogonal polarizations become incoherent after passing in the fiber a distance more than the depolarization length. The incoherent waves don't interfere with each other due to a randomly changed relative phase. For calculation of the depolarization length the following expression is used: **L_{D}** = **L_{B} λ** / **Δλ,** where **L_{B} -** the polarization beat length (the parameter which characterizes a value of the fiber birefringence), **λ** - the radiation wavelength, **Δλ -** a radiation spectrum width (see 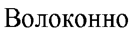 - 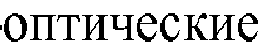 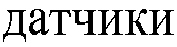 . 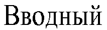 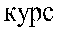 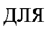 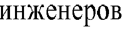 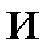 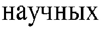 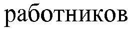 . 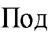 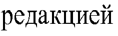 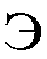 . 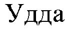 , 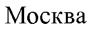 : 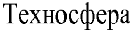 , 2008 - 520 c. 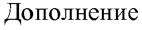 A, cTp. 476 (500), i.e. Fiber-optic sensors. Introduction for engineers and scientists. Edited by E.Udd, Moscow, Technosphere, 2008. - 520 p. Appendix A, p. 476 (500)). For example, if the radiation wavelength - 800 nm, the radiation spectrum width - 30 nm, the polarization beat length - 3 mm (average empirical parameters) then the depolarization length is equal to 8 cm.

The fundamental origin of the FOG bias and the bias instability is a finite suppression of the wave with the unworking polarization by the polarizer *(an amplitude transmission of the wave with* the *unworking polarization - ε; -20log(ε)* = *extinction coefficient of* the *polarizer in dB; that is ε*=*0.01 corresponds to* the *polarizer with* the *practically achievable extinction 40dB).* The waves, which pass the polarizer with the working polarization in both directions, don't result in the FOG bias (Lorentz Reciprocity Principle). The waves, which pass the polarizer with unworking polarization (the secondary waves) can interfere with the main waves that results in the FOG bias. In general this bias is proportional to **ε** coefficient and to a ratio of the secondary wave amplitude to the amplitude of the main wave. For all-fiber FOG, where the fiber birefringent axes and the polarizer axes don't coincide, this bias can be a source of a significant error due to comparable amplitudes of the main and the secondary waves. The secondary waves cannot be suppressed completely. In this case decreasing of a mutual coherency between the main and the secondary waves is a possibility (inter alia) to decrease the FOG bias and the bias drift. Note, that an effective interference is possible if a difference of the optical paths (the phase difference) between the main and the secondary waves at photo-receiving module is smaller than then the depolarization length.

Let's consider the possible delays between the main and the secondary waves at photo-receiving module for the all-fiber FOG (Fig.1) taking into account the following:
- the fiber loop length is 100 m and more;
- the lengths of the fiber segments between the FOG components are from 10 cm to several tens of centimeters (depending on technological facilities and design requirements);
- the depolarization length is 8 cm (see above).

All possible sums of the phase delays, which were accumulated during a waves propagation along the fiber segments X, Y, Z in both directions, are much smaller (in scale of the depolarization length) than the phase delay in the fiber loop for the waves with the eigen polarizations. Therefore, only the waves (main and secondary), which passed the fiber loop in the same polarization mode, can be reciprocally coherent. So, for the purposes of present consideration we can suppose that the fiber loop doesn't originate an additional delay between the main and the secondary waves.

For each of the counter-propagating waves the fiber segments are passed in the following order: Z, Y, X, X, Y (see Fig.1). The phase delays of the counter-propagating waves can be different depending on parameters and an orientation of the optical components.

That is important for our analysis to know the possible differences of the wave delays. If the delays difference is bigger than the coherence length the secondary waves don't interfere with the main waves after passing of the polarizer and don't originate a false (erroneous) rotation signal even if the the fiber birefringent axes are not coincide at inputs/outputs of optical components. If the delays difference is smaller than the coherence length the false signal arises and it is proportional to amplitudes of the secondary interfering waves (the first order of **ε**).

Two equivalent configurations for an effective suppression of the interference of the secondary waves can be presented in the following way:
1) Y=3X, Z=9X, where X > the depolarization length;
   or
2) X=3Y, Z=9Y, where Y > the depolarization length.

For the stated above ratio of the fiber segments all possible paths differences will be multiple of minimal mentioned segment. So, if the length of the minimal segment X (or Y) is bigger than the depolarization length, an interference of the main and the secondary waves is suppressed effectively and the false signal (bias) doesn't arise. For practical purposes it is recommended twofold excess of the minimal segment length (X or Y) over the depolarization length that results in decreasing of a mutual coherency in 10 times (**e²**).

Analyzing a pass sequence of the fiber segments between the components {Z, Y, X, X, Y} it can be seen that a phase incursion at the segment Z can be compensated by the incursions at a series of segments {Y, X, X, Y} and a phase incursion at segment Y can be compensated by the incursions at a series of segments {X, X}. So, the maximal phase incursion at a series of segments {X, X} is 2X and a possible intermediate compensation at fiber section {X, X, Y} can be excluded by choosing of Y length equal to 3X. Similarly, taking into account that Y=3X and the maximal phase incursion at series of segments {Y, X, X, Y} is 8X (3X+X+X+3X), the possible final compensation at the fiber section {Z, Y, X, X, Y} can be excluded by choosing of Z length equal to 9X. Note, that X and Y segments are interchangeable in this consideration.

All mentioned above reasons and conclusions are confirmed by model numerical calculations of amplitude and phase parameters of the counter-propagating waves which are based on Jones Matrix Method (see Shurcliff W.A. Polarized Light. Cambridge, Massachusetts: Harvard Univ. Press., 1962). These calculations describe a transformation of the counter-propagating waves at the places (a1, ..., a7) of a cross-polarization coupling (see Fig.1) and at the birefringent fiber segments X, Y, Z taking into account an averaging over a radiation spectrum.

In the present FOG architecture the phase delays between the main waves and the secondary nonreciprocal (passed by different paths) counter-propagating waves cannot be less than the coherence length of the emitting module.

### INDUSTRIAL APPLICABILITY

The present all-fiber FOG architecture enables to increase a yield (according to criteria for the bias and the bias stability) of the fit FOG due to a localization of main defects and an optimal choosing of the lengths of the fiber segments between the optical components.

## Claims

1. A fiber optic gyroscope (FOG), comprising:
a multiturn closed loop fabricated from a birefringent single-mode optical fiber, hereinafter the fiber loop, an emitting module (1), a photo-receiving module (7), two couplers (2,4), a polarizer (3), a phase modulator (6), a phase detector (11), an amplifier (9), a filter (10), and a generator (12):
wherein:
- an optical output of the emitting module (1) is coupled via a first coupler (2) to a first input/output of the polarizer (3);
- a second input/output of the polarizer (3) is coupled via a second coupler (4) to a first input/output of the fiber loop (5) which is coupled via the phase modulator (6) and its second input/output to the second coupler (4);
- the first coupler (2) is coupled to an optical input of the photo-receiving module (7);
- an electrical output of the photo-receiving module (7) is connected to a first input of the phase detector (11) via the amplifier (9) and the filter (10) which are connected in-series;
- a output of the phase detector (11) is a FOG output;
- a second input of the phase detector (11) is connected to a generator output which is also connected to a input of phase modulator;
- the emitting and photo-receiving modules are coupled to the first coupler by segments of the birefringent single-mode optical fiber and the both couplers are coupled to the polarizer by segments of the same fiber;
- the fiber loop, the phase modulator, the couplers and the polarizer are produced on a single fiber segment without splices; **characterized in that**
the lengths of the fiber segments connecting the polarizer to the couplers (X, Y) differ in three times and the length of the shorter of these segments is greater than the depolarization length of the fiber but nine times less than the length of the fiber segment connecting the emitting module to the first coupler (Z).

2. The fiber optic gyroscope of claim 1, wherein the length of the fiber segment connecting the polarizer to the first coupler (Y) is greater than the length of the fiber segment connecting the polarizer to the second coupler (X).

3. The fiber optic gyroscope of claim 1, wherein the length of the fiber segment connecting the polarizer to the second coupler (x) is greater than the length of the fiber segment connecting the polarizer to the first coupler (Y).

## Patentansprüche

1. Faserkreisel (FOG), aufweisend:
eine aus einem doppelbrechenden Monomode-Glasfaser gebildete geschlossene Schleife mit vielen Windungen, die im Folgenden als Faserschleife bezeichnet wird,
ein Emissionsmodul (1),
ein Fotoempfangsmodul (7),
zwei Koppler (2, 4),
einen Polarisator (3),
einen Phasenmodulator (6),
einen Phasendetektor (11),
einen Verstärker (9),
ein Filter (10) und
einen Generator (12):
wobei:
- ein optischer Ausgang des Emissionsmoduls (1) über einen ersten Koppler (2) mit einem ersten Ein-/Ausgang des Polarisators (3) gekoppelt ist;
- ein zweiter Ein-/Ausgang des Polarisators (3) über einen zweiten Koppler (4) mit einem ersten Ein-/Ausgang der Faserschleife (5) gekoppelt ist, welche über den Phasenmodulator (6) und ihren zweiten Ein-/Ausgang mit dem zweiten Koppler (4) verbunden ist;
- der erste Koppler (2) mit einem optischen Eingang des Fotoempfangsmoduls (7) gekoppelt ist;
- ein elektrischer Ausgang des Fotoempfangsmoduls (7) über den Verstärker (9) und das Filter (10), welche in Serie geschaltet sind, mit einem ersten Eingang des Phasendetektors (11) verbunden ist;
- ein Ausgang des Phasendetektors (11) ein Ausgang des Faserkreisels (FOG) ist;
- ein zweiter Eingang des Phasendetektors (11) mit einem Generatorausgang verbunden ist, welcher auch mit einem Eingang des Phasenmodulators verbunden ist;
- das Emissionsmodul und das Fotoempfangsmodul durch Segmente des doppelbrechenden Monomode-Glasfasers mit dem ersten Koppler verkoppelt sind und die beiden Koppler über Segmente des gleichen Fasers mit dem Polarisator gekoppelt sind;
- die Faserschleife, der Phasenmodulator, die Koppler und der Polarisator ohne Spleiße an einem einzigen Fasersegment gebildet sind;
**dadurch gekennzeichnet, dass**
- sich die Längen der Fasersegmente, welche den Polarisator mit den Kopplern (X, Y) verbinden, um das Dreifache unterscheiden und die Länge des Kürzeren dieser Segmente größer als die Depolarisationslänge des Fasers, aber neunmal kleiner als die Länge des Fasersegments ist, welches das Emissionsmodul mit dem ersten Koppler (Z) verbindet.

2. Faserkreisel nach Anspruch 1, wobei die Länge des Fasersegments, welches den Polarisator mit dem ersten Koppler (Y) verbindet, größer als die Länge des Fasersegments ist, welches den Polarisator mit dem zweiten Koppler (X) verbindet.

3. Faserkreisel nach Anspruch 1, wobei die Länge des Fasersegments, welches den Polarisator mit dem zweiten Koppler (X) verbindet, größer als die Länge des Fasersegments ist, welches den Polarisator mit dem ersten Koppler (Y) verbindet.

## Revendications

1. Gyroscope à fibre optique (FOG), comprenant :
une boucle fermée à spires multiples fabriquée à partir d'une fibre optique monomode biréfringente, ci-après la boucle de fibre,
un module émetteur (1),
un module photorécepteur (7),
deux coupleurs (2, 4),
un polariseur (3),
un modulateur de phase (6),
un détecteur de phase (11),
un amplificateur (9),
un filtre (10) et
un générateur (12):
dans lequel :
- une sortie optique du module émetteur (1) est couplée via un premier coupleur (2) à une première entrée/sortie du polariseur (3) ;
- une seconde entrée/sortie du polariseur (3) est couplée via un second coupleur (4) à une première entrée/sortie de la boucle de fibre (5) qui est couplée via le modulateur de phase (6) et sa seconde entrée/sortie au second coupleur (4) ;
- le premier coupleur (2) est couplé à une entrée optique du module photorécepteur (7) ;
- une sortie électrique du module photorécepteur (7) est reliée à une première entrée du détecteur de phase (11) via l'amplificateur (9) et le filtre (10) qui sont raccordés en série ;
- une sortie du détecteur de phase (11) est une sortie de FOG ;
- une seconde entrée du détecteur de phase (11) est reliée à une sortie de générateur qui est également reliée à une entrée de modulateur de phase ;
- les modules émetteur et photorécepteur sont couplés au premier coupleur par des segments de la fibre optique monomode biréfringente et les deux coupleurs sont couplés au polariseur par des segments de la même fibre ;
- la boucle de fibre, le modulateur de phase, les coupleurs et le polariseur sont produits sur un segment de fibre unique sans épissures ;
**caractérisé en ce que**
les longueurs des segments de fibre reliant le polariseur aux coupleurs (X, Y) diffèrent par trois fois et la longueur du plus court de ces segments est plus grande que la longueur de dépolarisation de la fibre mais neuf fois inférieure à la longueur du segment de fibre reliant le module émetteur au premier coupleur (Z).

2. Gyroscope à fibre optique selon la revendication 1, dans lequel la longueur du segment de fibre reliant le polariseur au premier coupleur (Y) est supérieure à la longueur du segment de fibre reliant le polariseur au second coupleur (X).

3. Gyroscope à fibre optique selon la revendication 1, dans lequel la longueur du segment de fibre reliant le polariseur au second coupleur (X) est supérieure à la longueur du segment de fibre reliant le polariseur au premier coupleur (Y).
